## Europäisches Patentamt
## European Patent Office
## Office européen des brevets

(11) Veröffentlichungsnummer: **0 065 035**
**B1**

(12) **EUROPÄISCHE PATENTSCHRIFT**

(45) Veröffentlichungstag der Patentschrift:
25.01.84

(51) Int. Cl.³: **C 02 F 3/28**

(21) Anmeldenummer: 81104818.0

(22) Anmeldetag: 23.06.81

(54) Verfahren zur Denitrifikation von Wasser und Anlage zur Durchführung des Verfahrens.

(30) Priorität: 20.05.81 CH 3289/81

(43) Veröffentlichungstag der Anmeldung:
24.11.82 Patentblatt 82/47

(45) Bekanntmachung des Hinweises auf die Patenterteilung:
25.01.84 Patentblatt 84/4

(84) Benannte Vertragsstaaten:
DE FR GB IT

(56) Entgegenhaltungen:
DE - A - 2 918 950

(73) Patentinhaber: **GEBRÜDER SULZER AKTIENGESELLSCHAFT**, Zürcherstrasse 9, CH-8401 Winterthur (CH)

(72) Erfinder: **Gros, Henry, Dr., Dipl.-Chem., Im Kleinbasel, CH-8357 Guntershausen (CH)**
Erfinder: **Kyburz, Markus, Klosterstrasse 46, CH-8406 Winterthur (CH)**

(74) Vertreter: **Dipl.-Ing. H. Marsch Dipl.-Ing. K. Sparing Dipl.-Phys.Dr. W.H. Röhl Patentanwälte,** Retheistrasse 123, D-4000 Düsseldorf (DE)

## Verfahren zur Denitrifikation von Wasser und Anlage zur Durchführung des Verfahrens

Die Erfindung betrifft ein Verfahren zur Denitrifikation von Wasser, insbesondere Trinkwasser, mit Hilfe von wasserstoffoxidierenden Mikroorganismen in einem Reaktor, wobei das zu behandelnde Rohwasser mindestens mit Wasserstoff begast und der Reaktor mindestens von einer flüssigen und einer Gasphase durchsetzt wird, und eine Anlage zur Durchführung des Verfahrens.

Die biologische Denitrifikation von Wasser, besonders von Trinkwasser, – d.h. der Abbau von im Wasser gelösten Nitrat ($NO_3$) – bzw. Nitrit ($NO_2$) – Ionen mit Hilfe von wasserstoffoxidierenden Mikroorganismen in mehreren Stufen zu molekularem Stickstoff – ist bekannt (J.C. Ginocchio «Biologische Denitrifikation von Trinkwasser», «Sulzer Technische Rundschau» 3/80, Seite 115/116).

Da die für diesen biologischen Abbau benötigte Wasserstoffkonzentration relativ hoch ist – für den Abbau von beispielsweise 100 mg/l $NO_3$-Ionen benötigt man etwa 9 mg/l Wasserstoff ($H_2$) – ist es notwendig, in das zu denitrifizierende Rohwasser erhebliche Mengen Wasserstoff einzutragen; gegebenenfalls müssen dem Rohwasser weiterhin kohlenstoff-, phosphorhaltige Nährstoffe und weitere Spurenelemente für die Organismen zugesetzt werden.

Eine generelle Aufgabe bei diesen Denitrifikationsverfahren ist es daher, bei möglichst geringem Verbrauch an relativ teurem Wasserstoff den Mikroorganismen in dem Wasser eine ausreichende Menge Wasserstoff und die für die biologisch-chemischen Reaktionen benötigte Kontaktzeit des Rohwassers mit dem Wasserstoff im Reaktor zur Verfügung zu stellen. Unter den bisher bekannten Verfahren kennt man solche mit direktem Wasserstoffeintrag, bei dem Rohwasser und Wasserstoffgas den Reaktor direkt im Gegenstrom durchsetzen, wobei der Wasserstoff von unten nach oben durch den vertikalen Reaktor perlt. Trotz relativ grosser Verluste an Wasserstoff sind bei diesen Verfahren der Wasserstoffeintrag – infolge der geringen Löslichkeit des Wasserstoffs im Wasser – und die Kontaktzeit – infolge des Gegenstromprinzipes – ungenügend. Darüberhinaus entsteht im Reaktor gasförmiger Stickstoff, der parallel zum Wasserstoff im Reaktor aufsteigt; dadurch und durch das Inlösunggehen eines Teiles des Wasserstoffs erfolgt in der Gasphase eine relative Verarmung an Wasserstoff, was zur Verringerung des Übergangs von Wasserstoff aus der Gasphase in die Flüssigphase, also zu einem verringerten Inlösunggehen des Wasserstoffs führt.

Bei bekannten Systemen mit externem oder indirektem Wasserstoffeintrag wird das Wasser durch den Reaktor und ein Begasungsgefäss im Kreislauf geführt; in mehrmaligem Umlauf gelingt es dabei zwar, genügende Mengen des wenig löslichen Wasserstoffs, im Rohwasser gelöst, in den Reaktor zu bringen. Da jedoch Wasser aus dem Reaktor die Begasungsstufe durchsetzt, kommt es in dieser bereits zu einer erheblichen Stickstoffentwicklung, die wiederum die geschilderte Wasserstoff-Verdünnung nach sich zieht. Die Kreislaufführung ist zudem mit dem Nachteil verbunden, dass ein solches System einen erheblichen Eintrag an Energie erfordert, da das Wasser beispielsweise im Mittel etwa 20mal umgewälzt wird; zudem ist die Begasungsstufe einem gewissen biologischen Wachstum ausgesetzt, das neben der erwähnten Verminderung des Wasserstoffüberganges auch gewisse Betriebsprobleme im Leitungs- und Pumpensystem mit sich bringt.

Aufgabe der Erfindung ist es daher, die Denitrifikation von Wasser – unter möglichst geringem Aufwand an Energie, sowie für Investitionen und Betriebsmittel – so zu führen, dass die geschilderten Nachteile der bekannten Verfahren und Vorrichtungen vermieden werden; insbesondere sind dabei eine ausreichende Menge an gelöstem Wasserstoff im Wasser und ausreichende Kontaktzeiten auch für den Abbau grösserer Mengen von Nitrat- oder Nitrit-Ionen zu gewährleisten. Diese Aufgabe wird erfindungsgemäss dadurch gelöst, dass der Wasserstoff während eines dem Reaktor vorgelagerten Begasungsschrittes in den durchfliessenden, d.h. von der Beimischung eines Zirkulationsstromes aus dem Reaktor freien, Rohwasserstrom eingetragen wird, und dass anschliessend flüssige und gasförmige Phase gleichsinnig durch den Reaktor geführt werden; eine Anlage zur Durchführung des Verfahrens ist dabei dadurch gekennzeichnet, dass dem Reaktor in einem offenen Kreislauf eine Begasungsstufe für das Rohwasser vorgeschaltet ist, die im Bodenbereich des Reaktors an diesen angeschlossen ist.

Der Wasserstoffeintrag in den Rohwasserdurchfluss vermindert die Gefahr, dass ein ins Gewicht fallender Teil der biologischen Abbaureaktionen bereits vor dem Reaktor abläuft und so zu der geschilderten Verdünnung der Gasphase durch den als Abbauprodukt entstehenden Stickstoff führt; die Führung von zu behandelndem Wasser und gasförmigem Wasserstoff durch den Reaktor im Gleichstrom gewährleistet relativ lange Kontaktzeiten, was zu einer guten Wasserstoff-«Ausbeute» bei den biologisch-chemischen Reaktionen führt, wodurch der Wasserstoffbedarf für den Abbau einer bestimmten Nitrat- bzw. Nitrit-Menge minimalisiert wird. '

Als vorteilhaft hat sich herausgestellt, wenn der Wasserstoff der Gasphase in der Form von kleinen Blasen in den Reaktor hineinfliesst bzw. in diesem entsteht; dieser Forderung ist beispielsweise Rechnung getragen, wenn mindestens etwa 50% der Gasphase in Blasen mit einem Durchmesser von 2–200 μm vorliegen. Im von den beiden Phasen gleichsinnig durchströmten Reaktor erhält man so dank der geringen Aufstiegsgeschwindigkeit kleiner Blasen längere Aufenthaltszeiten der Gasbläschen. Aufgrund der dadurch verlängerten Kontaktzeiten im Reaktor ergibt sich daraus eine weitere Verbesserung der Ausnützung des Wasserstoffs. Weiterhin ist bei kleinen Gasblasen das Verhältnis von Oberfläche zu Gesamtvolumen der Gasphase gross, so dass ein Inlösunggehen des Wasserstoffes zur Nachspeisung der durch die biologisch-chemischen Reaktionen verbrauchten Menge erleichtert wird.

Für die Erzeugung kleiner Gasblasen hat es sich bewährt, wenn der Wasserstoff durch elektrolytische Zersetzung des Wassers erzeugt wird, wobei die Anordnung der Elektroden möglichst nahe am Eintritt des Rohwassers in den Reaktor erfolgt. Der dabei gleichzeitig entstehende Sauerstoff kann durch geeignete, bekannte Massnahmen am Übertritt in den Reaktor gehindert werden. In anderen Fällen ist es zweckmässig, wenn während des Begasungsschrittes im Rohwasser ein Überdruck erzeugt und der eingetragene Wasserstoff mindestens teilweise gelöst wird, wobei der gelöste Wasserstoff dann spätestens im Reaktor durch Entspannen des wasserstoffhaltigen Rohwassers in Form von kleinen Gasblasen mindestens teilweise wieder ausgeschieden werden kann. Die Höhe des Überdrucks wählt man dabei mit Vorteil so, dass der Überdruck für je 10 mg/l an abzubauenden Nitrationen etwa 1 bar beträgt. Denn auf diese Weise wird die Auflösung einer für den Abbau des Nitrats bzw. Nitrits genügend grossen Wasserstoffmenge im Rohwasser gewährleistet.

In gewissen Fällen kann es zweckmässig sein, mindestens auf eine vollständige Entspannung des Überdrucks im Reaktor zu verzichten und diesen unter erhöhten Druck zu betreiben; dadurch wird die im Rohwasser gelöste Menge an Wasserstoff im Gesamtvolumen des Wassers im Reaktor erhöht.

Ist es notwendig, neben dem Wasserstoff als Nährstoff für die Mikroorganismen kohlenstoffhaltige Substanzen dem Wasser zuzusetzen, so kann dies durch eine zusätzliche Begasung des Rohwassers mit Kohlendioxid ($CO_2$) erfolgen.

Die Begasungsstufe einer erfindungsgemässen Anlage kann zweckmässigerweise so gebildet sein, dass sie eine Druckerhöhungseinrichtung für das Rohwasser und einen Druckbehälter für die Sättigung des Rohwassers mit Wasserstoff unter Überdruck enthält. Weiterhin kann dabei zwischen dem Druckbehälter und dem Reaktor ein Entspannungsorgan vorgesehen sein.

Ist wegen der geringen Löslichkeit von Wasserstoff in Wasser bei einmaligem Durchsatz des Rohwassers durch den Druckbehälter der Begasungsstufe nur ein ungenügender Wasserstoffeintrag zu erreichen, so kann man den Eintrag verbessern, wenn der Druckbehälter mit einer Umwälzleitung für das begaste Rohwasser versehen ist. Ebenso kann der Reaktor zur Intensivierung gewisser Mischungsphänomene – wie z.B. bessere Phasenübergänge der an den Reaktionen beteiligten Stoffe infolge erhöhter Strömungsgeschwindigkeiten bei insgesamt gleichbleibenden Verweilzeiten im Reaktor – in sich als Schlaufenreaktor ausgebildet sein; dabei kann es zweckmässig sein, die Umwälzung über die Schlaufe beispielsweise nicht über die ganze Reaktorhöhe zu führen, so dass im oberen Teil eine beruhigte Zone verbleibt, durch die die «Ausnützung» des Wasserstoffs verbessert wird.

Eine sehr zweckmässige Anlage, bei der eine selbsttätige Druckerhöhung im Rohwasser vor dem Reaktor und eine selbsttätige Entspannung in demselben erfolgen, erhält man, wenn die Begasungsstufe bzw. der Reaktor je einen vertikalen Schenkel eines U-rohrartigen Gefässes bilden, wobei es ferner zweckmässig ist, wenn die Einspeisung des Wasserstoffes in den die Begasungsstufe bildenden U-Rohrschenkel mindestens annähernd auf gleicher Höhe mit dem Rohwassereintritt liegt.

Im folgenden wird die Erfindung anhand von Ausführungsbeispielen im Zusammenhang mit der Zeichnung näher erläutert.

Fig. 1 zeigt schematisch eine erste Anlage zur Durchführung des erfindungsgemässen Verfahrens, bei der der Wasserstoffeintrag unter erhöhtem Druck erfolgt;

Fig. 2 ist ein Ausführungsbeispiel für den Anlagenteil von Fig. 1, in dem der Wasserstoffeintrag durchgeführt wird;

Fig. 3 schliesslich gibt schematisch eine zweite Anlage wieder, die in Form eines U-Rohres ausgebildet ist.

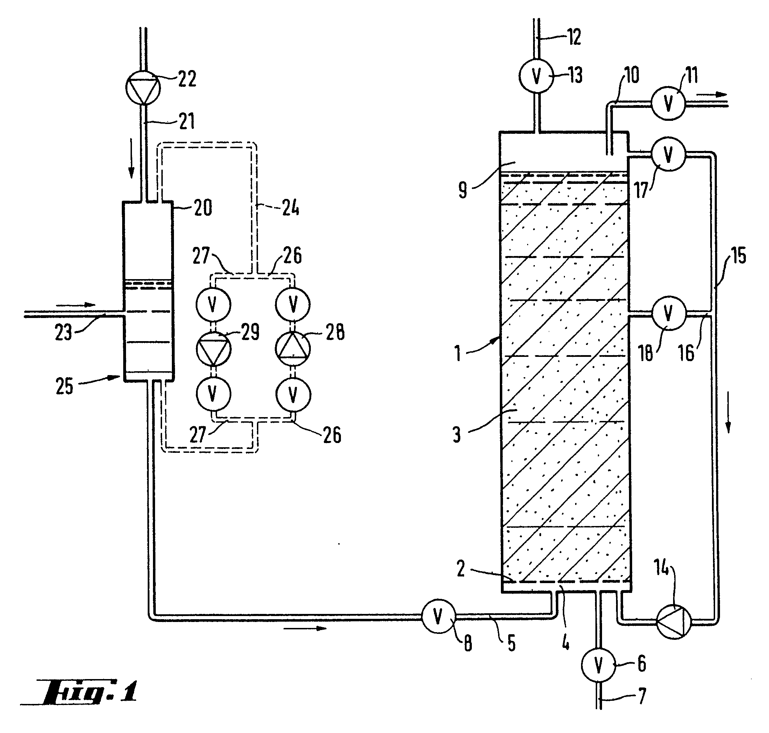

Für die Denitrifikation des Wassers mit Hilfe von Mikroorganismen enthält die Anlage nach Fig. 1 ein Reaktorgefäss 1, das, auf einem gas- und wasserdurchlässigen Zwischenboden 2 gelagert, ein Fest- oder ein Fliessbett 3 enthält; das Fest- oder Fliessbett 3 kann dabei eine körnige Masse aus einem der in der Filtertechnik bekannten Materialien – wie z.B. Sand, Aktivkohle, Kalziumkarbonat oder Kunststoff-Füllkörper – sein. Es ist jedoch auch möglich, dass das Festbett 3 aus sogenannten statischen Mischelementen besteht. Die Füllungen oder Einbauten des Reaktorgefässes 1 dienen als Trägermaterialien für die Ansiedlung der den Abbau der Nitrat- oder Nitritionen bewirkenden Mikroorganismen.

Unter dem Zwischenboden 2 befindet sich im Reaktorgefäss 1 ein Verteil- und Mischraum 4, in den eine Rohwasserzuführleitung 5 sowie eine mit einem Absperrorgan 6 versehene Nährmittelzugabeleitung 7 einmünden. Über die Zugabeleitung 7, die gleichzeitig auch als Abführleitung für Rückspülflüssigkeit – falls eine periodische Reinigung unter Rückspülung des Festbettes 3 erforderlich sein sollte – dienen kann, werden, falls für die Aufrechterhaltung des aktiven Lebens der Mikroorganismen erforderlich, weitere kohlenstoff- und/oder phosphorhaltige Nährstoffe in den Reaktor 1 eingespeist.

Über dem Festbett 3 enthält der Reaktor 1 einen Sammelraum 9 für das behandelte Wasser, das über eine Reinwasserleitung 10, in der ein einstellbares Drossel- und Absperrorgan 11 vorhanden ist, aus dem Reaktor weggeführt wird. Im Sammelraum 9 erfolgt eine Trennung der den Reaktor 1 durchsetzende Gasphase von dem Reinwasser; für die Wegführung der Gase ist eine Leitung 12 vorgesehen, die durch ein einstellbares Drossel- und Absperrorgan 13 abschliessbar ist. Die Drosselorgane 11 und 13 sind im allgemeinen Druckreduzierventile, mit denen im Reaktor 1 gegebenenfalls ein gewünschter Überdruck aufrechterhalten werden kann, wodurch, wie erwähnt, eine Erhöhung der im Wasser gelösten Wasserstoffmenge erreicht wird.

Der Reaktor 1 ist in sich als Schlaufenreaktor ausgeführt, d.h. zur Erhöhung der Strömungsgeschwindigkeit bei vorgegebener Verweilzeit kann ein Teil des in ihm enthaltenen Gas-Wasser-Gemisches in mindestens einem Teil seines Volumens umgewälzt werden. Diese Umwälzung erfolgt mit Hilfe einer Umwälzpumpe 14, die über Umwälzleitungen 15 und 16, die aus dem Sammelraum 9 bzw. dem Festbett 3 abzweigen und zur Einstellung der Zirkulationsmenge mit einstell- und absperrbaren Drosselventilen 17 und 18 ausgerüstet sind, die zirkulierende Menge zurück in den Verteilraum 4 fördert.

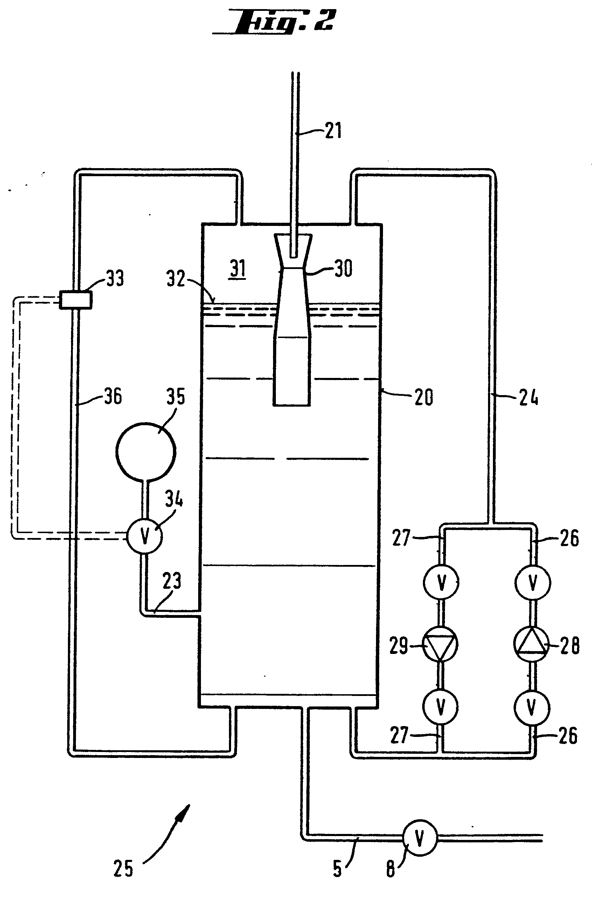

Die Rohwasserzuführleitung 5, in der ein Entspannungsorgan 8 eingebaut ist, schliesst den Reaktor 1 an eine Begasungsstufe 25 an; diese besteht im wesentlichen aus einem Druckbehälter 20, der in Zusammenhang mit Fig. 2 noch genauer beschrieben wird. In diesen führt eine Speiseleitung 21 für das Rohwasser, in der eine Druckerhöhungspumpe 22 vorgesehen ist, durch die der Druck des Rohwassers vor dem Behälter 20 erhöht wird. In den Behälter 20 mündet weiterhin eine Wasserstoffzuführleitung 23, die eine in Fig. 1 nicht dargestellte Druckgasquelle für Wasserstoff mit dem Behälter 20 verbindet.

Weiterhin ist der Behälter 20, der bis zu einem bestimmten Niveau mit Wasser gefüllt ist, mit einem Umwälzsystem für das in ihm befindliche Wasser und/oder den in seinem Gasraum gespeicherten Wasserstoff versehen. Dieses Umwälzsystem besteht wiederum aus einer Umwälzleitung 24, in der in zwei parallelen absperrbaren Strängen 26 und 27 eine Umwälzpumpe 28 für Wasser und ein Umwälzgebläse 29 für Wasserstoff vorgesehen sind.

Wie Fig. 2 zeigt, mündet die Rohwasserleitung 21 im Behälter 20 in einen Ejektor 30, durch den aus dem Wasserstoff gefüllten Gasraum 31 des Behälters 20 Wasserstoff angesaugt und in den Rohwasserstrom eingetragen wird. Das begaste Wasser, in dem sich ein Teil des Wasserstoffs gelöst hat, fliesst nach einer gegebenen Verweilzeit durch die Zuführleitung 5 unter Umständen nach einer Entspannung im Ventil 8 dem Reaktor 1 (Fig. 1) zu.

Reicht ein einfacher Durchlauf des Rohwassers durch den Druckbehälter 20 nicht aus, um eine ausreichende Menge an Wasserstoff im Wasser zu lösen oder, falls erforderlich, dieses mit Wasserstoff zu sättigen, so kann man den Stoffübergang im Druckbehälter 20 durch eine Umwälzung mit Hilfe der Pumpe 28 über die Leitung 24 erhöhen. Es ist aber auch möglich, durch die Leitung 24 in umgekehrter Richtung mit Hilfe des Gebläses 29 Wasserstoff umzuwälzen, so dass dieser das Wasser im Druckbehälter 20 mehrfach durchsetzt.

Das Niveau 32 des Wasserspiegels im Druckbehälter 20 regelt eine Mess-Sonde 33, die in einer Niveau-Messleitung 36 angeordnet ist und auf ein Absperrventil 34 in der ein Druckgefäss 35 für Wasserstoff mit dem Behälter 20 verbindenden Wasserstoffzuführleitung 23 einwirkt. Steigt das Niveau 32 über die Höhe der Mess-Sonde 33 an, so wird das Ventil 34 geöffnet. Der zusätzlich einströmende Wasserstoff drückt den Wasserspiegel 32 wieder nach unten bis – bei Unterschreiten des Niveaus der Sonde 33 – das Ventil 34 geschlossen wird.

Mit der in den Fig. 1 und 2 beschriebenen Anlage wird das erfindungsgemässe Verfahren beispielsweise wie folgt durchgeführt.

Das Rohwasser, das Nitratkonzentrationen von 30 bis über 200 mg/l aufweisen kann, enthält im vorliegenden Beispiel im Liter etwa 100–110 mg $NO_3$-Ionen. Es wird über die Pumpe 22 auf einen Druck von beispielsweise 7 bar gebracht; mit diesem Druck fliesst es über den Ejektor 30 in den Druckbehälter 20, in dem ein Druck von etwa 6 bar herrscht. Bei dieser leichten Entspannung reisst es aus dem wasserstoffgefüllten Gasvolumen 31 des Druckbehälters 20 Wasserstoff mit. Wie beschrieben, wird das Gasvolumen 31 mit Hilfe des Niveaureglers 33 aufrechterhalten, durch den das Auf/Zu-Absperrorgan 34 betätigt wird. Diesem vorgeschaltet ist ein nicht dargestelltes Druckreduzierventil, durch das der sehr hohe Gasdruck in der Gasflasche 35 auf ebenfalls 7 bar reduziert wird.

Das Wasser verbleibt in der Begasungsstufe 25 mehrere, beispielsweise 4–5, Minuten, wobei – falls bei direktem Durchfluss diese Zeiten nicht eingehalten werden können – mit Hilfe der Pumpe 28 eine Teilmenge des Wassers durch die Leitung 24 umgewälzt wird. Die Wasserstoffaufnahme kann auch mit Hilfe einer Umwälzung von Wasserstoff durch das Gebläse 29 über die Leitung 24 erhöht werden.

Das bei Überdruck begaste Wasser nimmt pro bar Druck maximal etwa 2 mg/l $H_2$ auf; wie bereits erwähnt, sind für den Abbau von 100 mg/l $NO_3$ etwa 9 mg/l $H_2$ erforderlich. Der im Druckbehälter 20 zu wählende Druck ist durch diese Forderung bestimmt.

Das mit $H_2$ mindestens nahezu gesättigte Wasser fliesst über das Entspannungsventil 8, in dem es auf den am Boden des Reaktors 1 herrschenden Druck von etwa 4 bar entspannt wird, in den Verteilraum 4. In diesem wird es über die ganze Fläche des Reaktors verteilt und gelangt im aufsteigenden Strom durch die Öffnungen im Zwischenboden 2 in das Festbett 3, das als Trägermaterial für die Mikroorganismen dient.

Der Druck im Verteilraum 4, der durch das Entspannungsventil 8 erzeugt wird, entspricht der Summe aus dem Druck der Wassersäule im Reaktor 1, dem Druckabfall im Festbett 3 und einem evtl. noch am Ende des Reaktors 1 aufrechterhaltene Überdruck, der durch die Ventile 11 und 13 gewährleistet und eingestellt wird. Die Verweilzeiten im Reaktor 1 betragen zwischen 0,5 und einigen Stunden, wenn als Trägermaterial für die Mikroorgnismen statische Mischelemente mit einer internen Oberfläche zwischen 100 und 500 m²/m³ dienen. Im vorliegenden Fall ist die interne Oberfläche der Mischelemente etwa 300 m²/m³; am Ende des Rekators wird ein Druck von 2 bar aufrechterhalten. Durch die Entspannung im Ventil 8 wird ein Teil des im Wasser zuvor gelösten $H_2$ in Form von kleinen Gasbläschen mit Blasengrössen zwischen beispielsweise 10 und 400 µm ausgeschieden. Diese kleinen Blasen steigen wegen ihres realtiv geringen Auftriebes relativ langsam im Festbett 3 auf, wodurch die Ausnützung des $H_2$ für die biologisch-chemischen Reaktionen verbessert wird.

Da das zu behandelnde Wasser grosse Mengen an $NO_3$-Ionen enthält, kann durch die biologischen Abbau-Reaktionen unter Umständen ein Mangel an kohlenstoff- und/oder phosphorhaltigen Nährstoffen für die Mikroorganismen entstehen oder der $p_H$-Wert zu gross werden. Diese Mängel werden durch eine Zudosierung von Kohlenstoff und/oder Phosphor beispielsweise durch die Zugabe von Hefeextrakt in Spuren, d.h. in Mengen von einigen mg/l, bzw. durch Zugabe von Kohlensäure – in einer Menge, dass der $p_H$-Wert auf etwa 7 gehalten werden kann – durch die Leitung 7 nach Öffnen des Ventils 6 ausgeglichen.

Weiterhin erfolgt über die Leitungen 15, 16 nach Öffnen der Ventile 17 oder 18 eine Umwälzung des Wassers mit Hilfe der Pumpe 14; bei dieser Umwälzung – durch die im Mittel ein etwa 3- bis 10facher Durchlauf für die einzelnen Wasserteilchen bewirkt, wird bevor sie den Reaktor 1 über die Leitung 10 verlassen – wird bei gleichbleibender mittlerer Verweilzeit die Strömungsgeschwindigkeit im Reaktor 1 erheblich gesteigert, wodurch die Mischungsintensität und die Phasenübergänge der einzelnen an den Reaktionen beteiligten Stoffe verbessert werden. Erfolgt eine Umwälzung über die Leitung 16 etwa auf ⅔ der gesamten Reaktorhöhe, so entsteht darüber eine beruhigte Zone in dem Reaktionsgemisch, durch die – gegenüber einer Umwälzung über die ganze Reaktorhöhe – die Ausnützung des im Wasser enthaltenen $H_2$ verbessert wird. Nach einer Verweilzeit von etwa 2 Stunden verlässt das denitrifizierte Wasser den Reaktor 1 über die Leitung 10; sein Nitratgehalt ist durch das erfindungsgemässe Verfahren auf etwa 5 bis 10 mg $NO_3$/l erniedrigt worden.

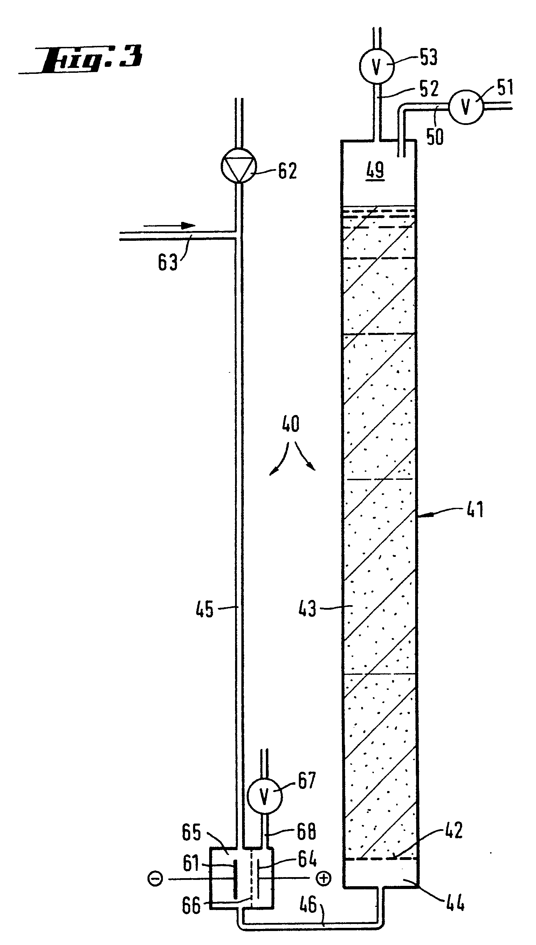

Beim Ausführungsbeispiel nach Fig. 3 besteht die Anlage zur Durchführung des neuen Verfahrens aus einer U-rohrartigen Anordnung 40, bei der der rechte Schenkel 41 den Reaktor bildet, in dem auf einem Zwischenboden 42 wiederum ein Festbett 43 als Träger für die Mikroorganismen enthalten ist. Zum Abfluss des denitrifizierten Wassers ist eine mit einem Ventil 51 absperrbare Leitung 50 vorgesehen, während die Gasphase, die in dem Sammelraum 49 von dem Wasser getrennt wird, über die mit dem Ventil 53 versehene Leitung 52 entweicht. Wie bei der ersten Ausführungsform des Reaktors kann auch der Reaktor 41 mit einem Umwälzsystem sowie mit Dosierleitungen für die Nährstoffe und/oder Säure versehen sein.

Der linke Schenkel 45 des U-Rohres 40, das beispielsweise eine Höhe zwischen 20 und 80 m haben kann, dient dem Aufbau des Überdrucks im Rohwasser, ehe dieses in den Reaktor 41 eintritt. Das Rohwasser wird dabei im Abwärtsstrom von einer Pumpe 62 gefördert, wobei Strömungsgeschwindigkeiten von beispielsweise 0,3 bis 2 m/s erreicht werden. Wird die Pumpe 62 als Überdruckpumpe ausgebildet, so kann auch am Ende des Reaktors 41 ein Überdruck von beispielsweise 2–4 bar aufrechterhalten werden, der über die Ventile 51 und 53 eingestellt und abgebaut wird.

Etwa auf der Höhe des Rohwassereintritts in den Schenkel 45 mündet in diesen eine Speiseleitung 63 für $H_2$, die von einer beliebigen nicht dargestellten Wasserstoffquelle gespeist wird. Durch sie wird Wasserstoff mit einem dem im Rohwasser herrschenden Druck angepassten Druck in das Rohwasser eingespeist; beide Medien fliessen gemeinsam abwärts, wobei sich der Druck stetig erhöht und gleichzeitig entsprechend der Druckerhöhung immer mehr $H_2$ kontinuierlich im Wasser gelöst wird.

Die Einspeisung von gasförmigem $H_2$ kann jedoch auch ersetzt oder ergänzt werden durch eine Einrichtung 65, in der Wasser elektrolytisch zersetzt wird. Diese Einrichtung 65 kann in einer beliebigen Höhe des Schenkels 45 plaziert sein. Um jedoch eine Zusammenlagerung der bei der Elektrolyse entstehenden kleinen Gasbläschen zu grossen Blasen vor dem Eintritt des begasten Wassers in den Verteilraum 44 des Reaktors 41 möglichst zu vermindern, ist die Einrichtung 65 bei der gezeigten Anordnung nahe dem horizontalen Schenkel 46 des U-Rohres 40 eingesetzt.

Die an sich bekannte Einrichtung 65 besteht aus einer Kathode 61, an der $H_2$ erzeugt wird, und aus einer Anode 64, die Sauerstoff produziert; dessen Eintritt in den Rohwasserstrom wird verhindert durch eine zwar wasserdurchlässige aber sauerstoffzurückhaltende schematisch als Blende 66 angedeutete Sauerstoff-Falle, aus der der Sauerstoff über eine mit einem Ventil 67 versehene Wegführleitung 68 entweichen kann.

Beide Elektroden 61 und 64 bestehen beispielsweise aus platinplatiertem Titan und sind an eine nicht dargestellte Gleichspannungsquelle angeschlossen. Für die Erzeugung von 1 g $H_2$ liegt der Leistungsverbrauch der Einrichtung 65 beispielsweise zwischen 0,2 und 0,6 kWh.

Wie erwähnt, wird bei der Elektrolyse $H_2$ bevorzugt in der gewünschten Form von kleinen Gasbläschen erzeugt, die teilweise im Rohwasser gelöst, teilweise von diesem mitgeführt, zunächst in den Verteilraum 44 und dann in den Reaktor 41 gelangen. Dessen Funktionsweise entspricht derjenigen des Reaktors 1 im ersten Ausführungsbeispiel.

Auch mit der Anlage nach Fig. 3 werden – bei Rohwasser mit ähnlicher Konzentration wie im Beispiel 1 – die $NO_3$-Ionen-Werte im behandelten, den Reaktor 41 verlassenden Wasser auf etwa 5–10 mg/l gesenkt.

**Patentansprüche**

1. Verfahren zur Denitrifikation von Wasser, insbesondere Trinkwasser, mit Hilfe von wasserstoffoxidierenden Mikroorganismen in einem Reaktor, wobei das zu behandelnde Rohwasser mindestens mit Wasserstoff begast und der Reaktor mindestens von einer flüssigen und einer Gasphase durchsetzt wird, dadurch gekennzeichnet, dass der Wasserstoff ($H_2$) während eines dem Reaktor (1, 41) vorgelagerten Begasungsschrittes in den durchfliessenden, d.h. von der Beimischung eines Zirkulationsstromes aus dem Reaktor (1, 41) freien, Rohwasserstrom eingetragen wird, und dass anschliessend flüssige und gasförmige Phase gleichsinnig durch den Reaktor (1, 41) geführt werden.

2. Verfahren nach Anspruch 1, dadurch gekennzeichnet, dass der Wasserstoff durch elektrolytische Zersetzung des Wassers erzeugt wird.

3. Verfahren nach Anspruch 1, dadurch gekennzeichnet, dass während des Begasungsschrittes im Rohwasser ein Überdruck erzeugt und der eingetragene Wasserstoff mindestens teilweise gelöst wird.

4. Verfahren nach Anspruch 3, dadurch gekennzeichnet, dass der gelöste Wasserstoff spätestens im Reaktor (1, 41) durch Entspannen des wasserstoffhaltigen Rohwassers in Form von kleinen Gasblasen mindestens teilweise wieder ausgeschieden wird.

5. Verfahren nach Anspruch 3, dadurch gekennzeichnet, dass der Überdruck für je 10 mg/l an abzubauenden Nitrat-Ionen etwa 0,5–1 bar beträgt.

6. Verfahren nach Anspruch 1, dadurch gekennzeichnet, dass dem Rohwasser zusätzlich Kohlendioxid zugesetzt wird.

7. Verfahren nach Anspruch 3, dadurch gekennzeichnet, dass der Reaktor (1, 41) unter erhöhtem Druck betrieben wird.

8. Anlage zur Durchführung des Verfahrens nach Anspruch 1, dadurch gekennzeichnet, dass dem Reaktor (1, 41) in einem offenen Kreislauf eine Begasungsstufe (25, 65) für das Rohwasser vorgeschaltet ist, die im Bodenbereich (4, 44) des Reaktors (1, 41) an diesen angeschlossen ist.

9. Anlage nach Anspruch 8, dadurch gekennzeichnet, dass die Begasungsstufe (25) eine Druckerhöhungseinrichtung (22) für das Rohwasser und einen Druckbehälter (20) für die Sättigung des Rohwassers mit Wasserstoff unter Überdruck enthält.

10. Anlage nach Anspruch 9, dadurch gekennzeichnet, dass zwischen dem Druckbehälter (20) und dem Reaktor (1) ein Entspannungsorgan (8) vorgesehen ist.

11. Anlage nach Anspruch 9, dadurch gekennzeichnet, dass der Druckbehälter (20) mit einer Umwälzleitung (24, 26, 28) für das begaste Rohwasser versehen ist.

12. Anlage nach Anspruch 8, dadurch gekennzeichnet, dass der Reaktor (1) als Schlaufenreaktor ausgebildet ist.

13. Anlage nach Anspruch 8, dadurch gekennzeichnet, dass die Begasungsstufe bzw. der Reaktor (41) je einen vertikalen Schenkel (45, 41) eines U-rohrartigen Gefässes (40) bilden.

14. Anlage nach Anspruch 13, dadurch gekennzeichnet, dass die Einspeisung (63) des Wasserstoffes in den die Begasungsstufe bildenden U-Rohrschenkel (45) mindestens annähernd auf gleicher Höhe mit dem Rohwassereintritt liegt.

**Claims**

1. A process for the denitrification of water, more particularly drinking water, by means of hydrogen-oxidizing microorganisms in a reactor, the water for treatment being gasified at least with hydrogen and the reactor being flowed through at least by one liquid phase and one gas phase, characterised in that the hydrogen ($H_2$) is introduced into the throughflowing untreated water – i.e., untreated water free from the admixture of a circulating flow from the reactor (1, 41) – in a gasifying step given previously to the reactor (1, 41), whereafter the liquid phase and gas phase flow cocurrently through the reactor (1, 41).

2. A process according to claim 1, characterised in that the hydrogen is produced by electrolytic decomposition of water.

3. A process according to claim 1, characterised in that during the gasification step a positive pressure is produced in the untreated water and the introduced hydrogen is dissolved at least to some extent.

4. A process according to claim 3, characterised in that the dissolved hydrogen is separated out again at least to some extent at the latest in the reactor (1, 41) by expansion of the hydrogencontaining untreated water, in the form of small gas bubbles.

5. A process according to claim 3, characterised in that the positive pressure is approximately from 0.5 to 1 bar per 10 mg/l of nitrate ions to be removed.

6. A process according to claim 1, characterised in that carbon dioxide is also added to the untreated water.

7. A process according to claim 3, characterised in that the reactor (1, 41) is operated at elevated pressure.

8. An apparatus for performing the process according to claim 1, characterised in that a gasification stage (25, 65) for the untreated water is disposed before the reactor (1, 41) in an open circuit and is connected to the reactor (1, 41) in the base region (4, 44) thereof.

9. An apparatus according to claim 8, characterised in that the gasification stage has pressure-raising means (22) for the untreated water and a pressure vessel (20) for saturating the untreated water with hydrogen at a positive pressure.

10. An apparatus according to claim 9, characterised in that an expansion element (8) is provided between the pressure vessel (20) and the reactor (1).

11. An apparatus according to claim 9, characterised in that the pressure vessel (20) has a circulating line (24, 26, 28) for the gasified untreated water.

12. An apparatus according to claim 8, characterised in that the reactor (1) is a loop reactor.

13. An apparatus according to claim 8, characterised in that the gasification stage and the reactor (41) each form one vertical arm (45, 41) of a U-tube-like vessel (40).

14. An apparatus according to claim 13, characterised in that the injection (63) of the hydrogen into the U-tube arm (45) forming the gasification stage is at at least substantially the same height as the untreated water entry.

**Revendications**

1. Procédé pour la dénitrification d'eau, en particulier d'eau potable, à l'aide de micro-organismes hydrogénoxydants dans un réacteur, l'eau brute à traiter étant gazéifiée au moins par de l'hydrogène et le réacteur étant traversé au moins par une phase liquide et une phase gazeuse, caractérisé par le fait que l'hydrogène (H₂) est introduit, lors d'une opération de gazéification conduite en amont du réacteur (1, 41), dans le flux traversant d'eau brute, c'est-à-dire sans adjonction d'un flux en circulation provenant du réacteur (1, 41), et par le fait que la phase liquide et la phase gazeuse sont ensuite dirigées dans le même sens à travers le réacteur (1, 41).

2. Procédé selon la revendication 1, caractérisé par le fait que l'hydrogène est engendré par décomposition électrolytique de l'eau.

3. Procédé selon la revendication 1, caractérisé par le fait qu'une surpression est engendrée dans l'eau brute pendant l'opération de gazéification et l'hydrogène introduit est au moins partiellement dissous.

4. Procédé selon la revendication 3, caractérisé par le fait que l'hydrogène dissous est de nouveau séparé au moins partiellement au plus tard dans le réacteur (1, 41), sous la forme de petites bulles gazeuses, par une détente de l'eau brute renfermant de l'hydrogène.

5. Procédé selon la revendication 3, caractérisé par le fait que la surpression est d'environ 0,5-1 bar pour chaque fraction de 10 mg/l d'ions nitrate devant être décomposés.

6. Procédé selon la revendication 1, caractérisé par le fait que de l'anhydride carbonique est ajouté en outre à l'eau brute.

7. Procédé selon la revendication 3, caractérisé par le fait qu'on fait fonctionner le réacteur (1, 41) sous pression élevée.

8. Installation pour la mise en œuvre du procédé selon la revendication 1, caractérisée par le fait qu'un étage (25, 65) de gazéification de l'eau brute, qui est raccordé au réacteur (1, 41) dans la région du fond (4, 44) de ce dernier, est installé dans un circuit ouvert en amont du réacteur (1, 41).

9. Installation selon la revendication 8, caractérisée par le fait que l'étage de gazéification (25) renferme un dispositif (22) d'élévation de pression pour l'eau brute et un réservoir de pression (20) pour la saturation de l'eau brute par l'hydrogène sous une surpression.

10. Installation selon la revendication 9, caractérisée par le fait qu'un organe de détente (8) est prévu entre le réservoir de pression (20) et le réacteur (1).

11. Installation selon la revendication 9, caractérisée par le fait que le réservoir de pression (20) est doté d'un conduit (24, 26, 28) de mise en circulation de l'eau brute gazéifiée.

12. Installation selon la revendication 8, caractérisée par le fait que le réacteur (1) est réalisé sous la forme d'un réacteur à boucle.

13. Installation selon la revendication 8, caractérisée par le fait que l'étage de gazéification et le réacteur (41) forment chacun une branche verticale (45, 41) d'un réservoir tubulaire (40) en U.

14. Installation selon la revendication 13, caractérisée par le fait que l'admission (63) d'hydrogène dans la branche (45) du tube en U formant l'étage de gazéification se situe au moins approximativement à la même hauteur que l'entrée de l'eau brute.

**Fig. 1**

**Fig. 2**

# Fig. 3